# EUROPEAN PATENT APPLICATION

(11) **EP 4 835 927 A1**
(43) Date of publication of application: **04.11.2026**
(21) Application number: 24910528.9
(22) Date of filing: 29.11.2024
(51) Int. Cl.: H01F 5/04, F16K 1/00

(54) **COIL ASSEMBLY, SOLENOID VALVE, AIR SPRING, ACTIVE SUSPENSION, AND VEHICLE**

(30) Priority: 27.12.2023 CN 202311836232
(71) Applicant: BYD Company Limited, Shenzhen, Guangdong 518118 (CN)
(72) Inventor: LUO, Zhongliang, Shenzhen, Guangdong 518118 (CN); LIU, Leqiang, Shenzhen, Guangdong 518118 (CN); YE, Meijiao, Shenzhen, Guangdong 518118 (CN); XU, Min, Shenzhen, Guangdong 518118 (CN)
(74) Representative: Mathys & Squire
(86) International application number: PCT/CN2024/135693
(87) International publication number: WO 2025/139595

(57) **Abstract**

A coil assembly, a solenoid valve, an air spring, an active suspension, and a vehicle are disclosed. The coil assembly is used in the solenoid valve. The coil assembly includes a coil component and a terminal. The coil component is provided with a boss. The terminal is provided at an end of an axial direction of the coil component, and the terminal is provided with a limiting slot. The boss is non-rotatably engaged with the limiting slot.

## Description

The present disclosure claims priority to Chinese Patent Application 202311836232.6, filed with the China National Intellectual Property Administration on December 27, 2023 and entitled "COIL ASSEMBLY, SOLENOID VALVE, AIR SPRING, ACTIVE SUSPENSION, AND VEHICLE", which is incorporated herein by reference in its entirety.

### TECHNICAL FIELD

The present disclosure pertains to the field of control valve technologies, and in particular, to a coil assembly, a solenoid valve, an air spring, an active suspension, and a vehicle.

### BACKGROUND

A solenoid valve is an electromagnetically controlled industrial device and is a basic automatic element used to control fluids. It is classified as an actuator, which is not limited to hydraulic or pneumatic systems. The solenoid valve can cooperate with different circuits, to achieve desired control and adjust direction, flow rate, speed, and other parameters of a medium. Due to high control precision and stability, the solenoid valve is widely used in the field of automobile production and modification. However, in an assembly process of a terminal and a coil, assembly consistency of the terminal and the coil is poor. To be specific, directional consistency of the terminal and the coil after assembly is poor, and the terminal and the coil are prone to relative rotation, resulting in poor stability of the terminal and the coil after assembly. This is not conducive to subsequent automatic assembly.

### SUMMARY

For disadvantages existing in the conventional technologies, the present disclosure provides a coil assembly, a solenoid valve, an air spring, an active suspension, and a vehicle that can reduce a relative rotation angle between a terminal and a coil, to improve assembly consistency of the terminal and the coil, and further facilitate automatic assembly.

According to one aspect, the present disclosure provides a coil assembly, configured for use in a solenoid valve, and including:
a coil component, wherein the coil component is provided with a boss; and
a terminal, wherein the terminal is disposed at an end of an axial direction of the coil component, the terminal being provided with a limiting slot, and the boss being non-rotatably engaged with the limiting slot.

In a possible implementation, the coil assembly further includes a magnetic conductive ring. The magnetic conductive ring is disposed between the coil component and the terminal. The magnetic conductive ring is provided with a positioning slot. The boss passes through the positioning slot and is non-rotatably engaged with the limiting slot.

In a possible implementation, a peripheral side wall of the boss is in contact with an inner side wall of the positioning slot, and the peripheral side wall of the boss is further in contact with an inner side wall of the limiting slot.

In a possible implementation, the coil component includes a bobbin, and the bobbin includes a first end plate and a column body that are fixedly connected to each other. The column body is configured to wind a wire group of the coil component. The first end plate is disposed at an end of the column body that is close to the terminal, and a part of the first end plate protrudes outward in a radial direction of the column body. A first wire routing slot is provided on a peripheral side wall of the first end plate, and the wire group passes through the first wire routing slot.

In a possible implementation, the first wire routing slot at least includes one first side surface, and the first side surface is not parallel to a central axis of the bobbin.

In a possible implementation, the first wire routing slot includes a first side surface and a second side surface that are disposed opposite to each other. The first side surface is inclined relative to a central axis of the first end plate, and the second side surface is inclined relative to the central axis of the first end plate. In addition, an inclination direction of the first side surface is the same as an inclination direction of the second side surface.

In a possible implementation, the boss is disposed at an end of the first end plate that is away from the column body. The boss is provided with a second wire routing slot, and the wire group passes through the second wire routing slot.

In a possible implementation, the boss includes a first portion and a second portion. The first portion is connected to the first end plate, and the second portion is connected to the first portion. An extension direction of the second portion and an extension direction of the first portion are disposed at an included angle to form the second wire routing slot.

In a possible implementation, two bosses are provided, and the two bosses are disposed opposite to each other in a diameter direction of the bobbin.

In a possible implementation, the two bosses have different structures.

According to another aspect, the present disclosure further provides a solenoid valve, including a housing, a valve body assembly, and the foregoing coil assembly. The housing has an accommodation cavity. The coil assembly and the valve body assembly are accommodated in the accommodation cavity. The coil assembly is sleeved on the valve body assembly.

In a possible implementation, the valve body assembly includes a valve core. The valve core includes a body portion, a buffer portion, and a first sealing portion. The buffer portion is disposed at an end of the body portion that is close to a terminal. The first sealing portion is disposed at an end of the body portion that is away from the terminal.

In a possible implementation, the valve core further includes a connection portion, and the connection portion integrally connects the buffer portion and the first sealing portion.

In a possible implementation, the valve core further includes a second sealing portion. The second sealing portion is disposed on a peripheral side wall of the body portion. The connection portion integrally connects the buffer portion, the first sealing portion, and the second sealing portion.

In a possible implementation, the valve body assembly includes a valve seat.

One of the valve seat and a coil component is provided with a first connection slot, and the other is provided with a first limiting column. The first limiting column is accommodated in the first connection slot.

In a possible implementation, the valve body assembly further includes a base. The base is disposed on a side of the valve seat that is away from the coil component. One of the valve seat and the base is provided with a second connection slot, and the other is provided with a second limiting column. The second limiting column is accommodated in the second connection slot.

In a possible implementation, the valve body assembly includes a valve seat and a movable iron core. A chamfer is disposed at an end of the movable iron core that is close to the valve seat. A flared portion is disposed at an end of the valve seat that is close to the movable iron core. The chamfer mates with the flared portion.

According to another aspect, the present disclosure further provides an air spring, including a main air chamber, an auxiliary air chamber, and the foregoing solenoid valve. The solenoid valve is configured to control connection or disconnection between the main air chamber and the auxiliary air chamber.

According to another aspect, the present disclosure further provides an active suspension, including the foregoing air spring or the foregoing solenoid valve.

According to another aspect, the present disclosure further provides a vehicle, including the foregoing active suspension, the foregoing air spring, or the foregoing solenoid valve.

According to the coil assembly, the solenoid valve, the air spring, the active suspension, and the vehicle provided in the present disclosure, the boss of the coil component is non-rotatably engaged with the limiting slot of the terminal, so that the limiting slot is configured to limit the boss, thereby reducing a relative rotation angle between the coil component and the terminal. This helps to improve consistency of the coil component and the terminal after assembly, and implement automatic assembly of the coil assembly, thereby further improving assembly efficiency of the coil assembly.

### DESCRIPTION OF DRAWINGS

To describe the technical solutions in embodiments of the present disclosure more clearly, the following briefly describes the accompanying drawings for describing embodiments. It is clear that the accompanying drawings in the following descriptions merely show some implementations provided in embodiments of the present disclosure, and a person of ordinary skill in the art may still derive other accompanying drawings from these accompanying drawings without creative efforts.
FIG. 1 is a diagram of a structure of a solenoid valve according to an embodiment of the present disclosure;
FIG. 2 is a sectional view of a solenoid valve according to an embodiment of the present disclosure;
FIG. 3 is an assembly diagram of a coil assembly according to an embodiment of the present disclosure;
FIG. 4 is a sectional view of a coil assembly according to an embodiment of the present disclosure;
FIG. 5 is a diagram of a structure of a terminal according to an embodiment of the present disclosure;
FIG. 6 is a diagram of a structure of a magnetic conductive ring according to an embodiment of the present disclosure;
FIG. 7 is a diagram of a structure of a coil component according to an embodiment of the present disclosure;
FIG. 8 is a front view of a coil component according to an embodiment of the present disclosure;
FIG. 9 is a partial enlarged view at a position A in the solenoid valve shown in FIG. 2;
FIG. 10 is a sectional view of a valve core according to an embodiment of the present disclosure;
FIG. 11 is a sectional view of another solenoid valve according to an embodiment of the present disclosure;
FIG. 12 is a partial enlarged view at a position B in the solenoid valve shown in FIG. 2; and
FIG. 13 is a diagram of a structure of a vehicle according to an embodiment of the present disclosure.

### DETAILED DESCRIPTION OF EMBODIMENTS

The following clearly and completely describes the technical solutions of the present disclosure with reference to the accompanying drawings in embodiments of the present disclosure. It is clear that the described implementations are merely some but not all of implementations of the present disclosure. All other implementations obtained by a person of ordinary skill in the art based on the implementations of the present disclosure without creative efforts shall fall within the protection scope of the present disclosure.

The following description of embodiments is made with reference to additional illustrations to illustrate particular embodiments in which the present disclosure may be implemented. Orientation terms mentioned in the descriptions of the present disclosure, for example, "upper", "lower", "front", "back", "left", "right", "inner", "outer", "top surface", "side surface", "bottom surface", "top wall", "side wall", "bottom wall", "inner side wall", "outer side wall", "length direction", "width direction", and "height direction" are merely directions with reference to the additional illustrations. Therefore, the orientation terms are used to better and more clearly describe and understand the present disclosure, instead of indicating or implying that an indicated apparatus or element needs to have a specific orientation, and be constructed and operated in the specific orientation. Therefore, such terms will not be understood as a limitation on the present disclosure. In the descriptions of the present disclosure, "first", "second", "third", "fourth", and the like are merely intended to distinguish between the described objects, and do not have any sequential or technical meaning. In the descriptions of the present disclosure, unless otherwise specified, terms "connection" and "connecting" include both a direct connection (connecting) and an indirect connection (connecting). In the descriptions of the present disclosure, it will be understood that both an "axial direction" and a "radial direction" are the axial direction and the radial direction relative to a solenoid valve in the accompanying drawings of the present disclosure.

The following describes in detail a structure of the solenoid valve provided in the present disclosure with reference to the accompanying drawings.

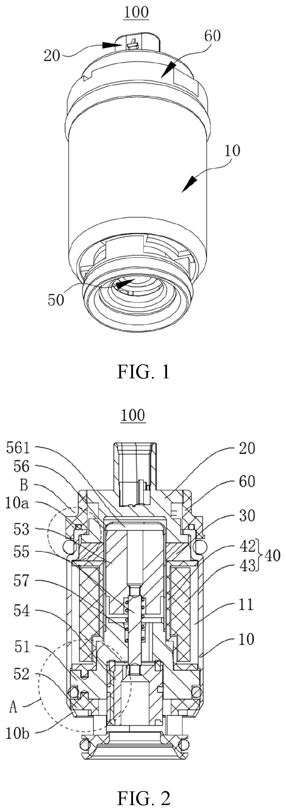

Referring to FIG. 1 and FIG. 2, FIG. 1 is a diagram of a structure of a solenoid valve according to an embodiment of the present disclosure. FIG. 2 is a sectional view of the solenoid valve according to an embodiment of the present disclosure.

This embodiment provides the solenoid valve 100. The solenoid valve 100 includes a housing 10, a terminal 20, a magnetic conductive ring 30, a coil component 40, a valve body assembly 50, and a sealing member 60. The coil component 40 includes a boss 41 and a bobbin 42. The valve body assembly 50 includes a valve seat 51, a base 52, a movable iron core 53, a valve core 54, a connection rod 55, and a magnetic isolation tube 56. The terminal 20, the magnetic conductive ring 30, and the coil component 40 form a coil assembly 234.

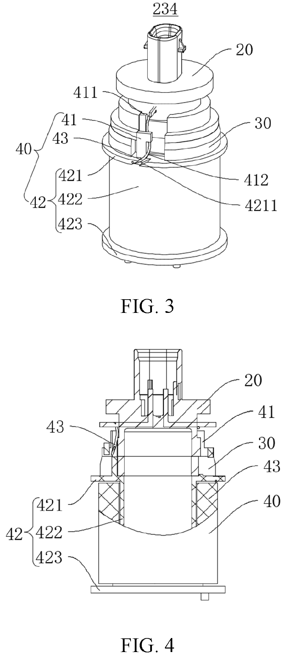

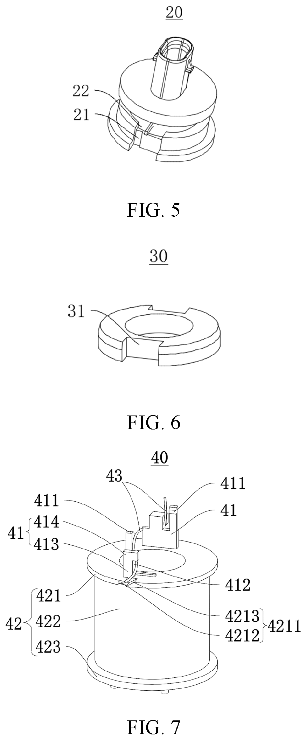

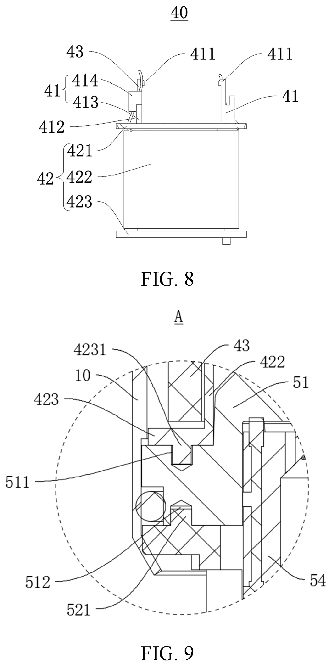

Refer to FIG. 1 to FIG. 8. FIG. 3 is an assembly diagram of the coil assembly according to an embodiment of the present disclosure. FIG. 4 is a sectional view of the coil assembly according to an embodiment of the present disclosure. FIG. 5 is a diagram of a structure of the terminal according to an embodiment of the present disclosure. FIG. 6 is a diagram of a structure of the magnetic conductive ring according to an embodiment of the present disclosure. FIG. 7 is a diagram of a structure of the coil component according to an embodiment of the present disclosure. FIG. 8 is a front view of the coil component according to an embodiment of the present disclosure.

In a specific embodiment, a housing 10 has an accommodation cavity 11 extending through in an axial direction. The housing 10 further includes a first end 10a and a second end 10b that are disposed opposite to each other in the axial direction. The accommodation cavity 11 extends through the first end 10a and the second end 10b in the axial direction. The coil assembly 234 and the valve body assembly 50 are disposed in the accommodation cavity 11, and the coil assembly 234 is sleeved on the valve body assembly 50. A part of the terminal 20 is fixedly connected to the accommodation cavity 11 and located at the first end 10a of the housing 10, and the other part of the terminal 20 extends out of the accommodation cavity 11 from the first end 10a of the housing 10. The magnetic conductive ring 30 is disposed in the accommodation cavity 11, and the magnetic conductive ring 30 is disposed on a side of the part of the terminal 20 that is located in the accommodation cavity 11. The coil component 40 is accommodated in the accommodation cavity 11, the coil component 40 is located on a side of the magnetic conductive ring 30 that is away from the terminal 20, and the coil component 40 passes through the magnetic conductive ring 30 and is connected to the terminal 20, so that the terminal 20, the magnetic conductive ring 30, and the coil component 40 are connected in the axial direction. The magnetic conductive ring 30 is arranged, so that the magnetic conductive ring 30 can concentrate and enhance a magnetic field, the magnetic field is more focused and evenly distributed, and the magnetic conductive ring 30 can further shield an external magnetic field from interference and protect internal components from impact of the external magnetic field. A part of the valve body assembly 50 is movably disposed in the accommodation cavity 11, and the other part of the valve body assembly 50 extends out of an accommodation cavity 561 from the second end 10b of the housing 10. The coil component 40 and the magnetic conductive ring 30 are both sleeved on the valve body assembly 50 located in the accommodation cavity 11.

The terminal 20 has a limiting slot 21. The coil component 40 is provided with the boss 41. The magnetic conductive ring 30 is provided with a positioning slot 31. The boss 41 passes through the positioning slot 31 of the magnetic conductive ring 30 and extends out from a side of the magnetic conductive ring 30 that is close to the terminal 20, and the boss 41 extending out from the positioning slot 31 of the magnetic conductive ring 30 is accommodated in the limiting slot 21. The positioning slot 31 and the limiting slot 21 are both configured to limit the boss 41.

In the solenoid valve 100 provided in the present disclosure, the coil assembly 234 passes through the positioning slot 31 of the magnetic conductive ring 30 through the boss 41 of the coil component 40, and the boss 41 is further accommodated in the limiting slot 21 of the terminal 20. The boss 41 is non-rotatably engaged with the positioning slot 31, the boss 41 is non-rotatably engaged with the limiting slot 21, and the positioning slot 31 and the limiting slot 21 are both configured to limit the boss 41, thereby reducing a relative rotation angle between the coil component 40, the magnetic conductive ring 30, and the terminal 20. This helps to improve assembly consistency of the coil component 40, the magnetic conductive ring 30, and the terminal 20 of the coil assembly 234. In other words, after assembly, the coil component 40, the magnetic conductive ring 30, and the terminal 20 of the coil assembly 234 have better structural stability. This helps to implement automatic assembly of parts of the coil assembly 234 and the solenoid valve 100, thereby improving assembly efficiency of the coil assembly 234 and the solenoid valve 100.

Further, a part of a peripheral side wall of the boss 41 is in contact with an inner side wall of the limiting slot 21, and the other part of the peripheral side wall of the boss 41 is in contact with an inner side wall of the positioning slot 31. The relative rotation angle between the coil component 40, the magnetic conductive ring 30, and the terminal 20 of the coil assembly 234 is completely restricted through the peripheral side wall of the boss 41, the inner side wall of the limiting slot 21, and the inner side wall of the positioning slot 31. This further improves the assembly consistency of the coil component 40, the magnetic conductive ring 30, and the terminal 20 of the coil assembly 234.

For example, the boss 41 is in interference fit with the inner side wall of the positioning slot 31, and the boss 41 is also in interference fit with the inner side wall of the limiting slot 21, to securely connect the coil component 40, the magnetic conductive ring 30, and the terminal 20 of the coil assembly 234 through the boss 41.

It will be understood that, in some other embodiments, the magnetic conductive ring 30 may be omitted. The boss 41 is accommodated in the limiting slot 21 and is non-rotatably engaged with the limiting slot 21. The limiting slot 21 is configured to limit the boss 41. This is not limited in the present disclosure. The boss 41 of the coil component 40 is non-rotatably engaged with the limiting slot 21 of the terminal 20, so that the limiting slot 21 is configured to limit the boss 41, thereby reducing a relative rotation angle between the coil component 40 and the terminal 20. This helps to improve consistency of the coil component 40 and the terminal 20 after assembly, and implement automatic assembly of such coil assembly 234, thereby further improving assembly efficiency of the coil assembly 234.

In this embodiment, there are two bosses 41, and the two bosses 41 are disposed opposite to each other in a radial direction of the coil component 40. Correspondingly, there are two positioning slots 31 of the magnetic conductive ring 30, and there are also two limiting slots 21 of the terminal 20. The two bosses 41 respectively pass through the two positioning slots 31 and are accommodated in the two limiting slots 21, to improve connection and limiting stability between the terminal 20, the magnetic conductive ring 30, and the coil component 40.

Further, structures of the two bosses 41 may be arranged to be different, so that the coil assembly 234 has an anti-misassembly function. This helps to improve assembly accuracy of the coil assembly 234.

It will be understood that, in some other embodiments, there may alternatively be one boss 41 or three, four, or the like. Correspondingly, there may also be one positioning slot 31 of the magnetic conductive ring 30 or three, four, or the like, and there may also be one limiting slot 21 of the terminal 20 or three, four, or the like, provided that the quantities of bosses 41, positioning slots 31, and limiting slots 21 are equal. In addition, each boss 41 can pass through a corresponding positioning slot 31 and be accommodated in a corresponding limiting slot 21. This is not limited in the present disclosure.

Refer to FIG. 1 to FIG. 7. In a specific embodiment, the limiting slot 21 is disposed on a peripheral side wall of the terminal 20. To be specific, an opening of the limiting slot 21 is located on the peripheral side wall of the terminal 20, and the limiting slot 21 extends in an axial direction of the terminal 20. In addition, the limiting slot 21 extends through an end face of an end of the terminal 20 that is close to the magnetic conductive ring 30, so that the boss 41 can pass through the positioning slot 31 and be accommodated in the limiting slot 21. The positioning slot 31 is disposed on a peripheral side wall of the magnetic conductive ring 30. To be specific, an opening of the positioning slot 31 is located on the peripheral side wall of the magnetic conductive ring 30. The positioning slot 31 extends through two opposite end faces of the magnetic conductive ring 30 in the axial direction, so that the boss 41 can pass through the magnetic conductive ring 30 and extend out from the magnetic conductive ring 30.

Refer to FIG. 2 to FIG. 7. In a specific embodiment, the coil component 40 includes the bobbin 42. The bobbin 42 is accommodated in the accommodation cavity 11. The magnetic conductive ring 30 is disposed between the bobbin 42 and the terminal 20. The boss 41 is disposed at an end of the bobbin 42 that is close to the magnetic conductive ring 30. A buckle 411 is disposed at an end of the boss 41 that is away from the bobbin 42. The terminal 20 is provided with a clamping slot 22. The buckle 411 and the clamping slot 22 are snap-fitted to each other. The buckle 411 of the boss 41 and the clamping slot 22 of the terminal 20 snap-fitted to each other, so that the coil component 40 and the terminal 20 are clamped, thereby fixing the coil component 40 and the terminal 20. Further, because the buckle 411 and the clamping slot 22 are snap-fitted to each other, relative movement between the coil component 40 of the coil assembly 234 and the terminal 20 in the axial direction is restricted, and the magnetic conductive ring 30 clamped between the bobbin 42 and the terminal 20 may be relatively fixed. In other words, movement of the magnetic conductive ring 30 relative to the coil component 40 in the axial direction is restricted, and movement of the magnetic conductive ring 30 relative to the terminal 20 in the axial direction is restricted. In this way, the buckle 411 of the boss 41 and the clamping slot 22 of the terminal 20 are snap-fitted to each other, so that relative movement between the coil component 40, the magnetic conductive ring 30, and the terminal 20 of the coil assembly 234 in the axial direction can be simultaneously restricted. This helps to improve connection stability of the coil assembly 234 in the axial direction.

Refer to FIG. 2 to FIG. 7. In a specific embodiment, the bobbin 42 includes a first end plate 421, a column body 422, and a second end plate 423. The first end plate 421 and the second end plate 423 are disposed at opposite ends of the column body 422 in the axial direction. The first end plate 421 is disposed at an end of the column body 422 that is close to the terminal 20. The column body 422 is configured to wind a wire group 43 of the coil component 40. The magnetic conductive ring 30 is disposed between the first end plate 421 and the terminal 20. A part of the first end plate 421 protrudes outward in a radial direction of the column body 422, for example, a radial dimension of the first end plate 421 may be greater than a radial dimension of the column body 422. The boss 41 is disposed at an end of the first end plate 421 that is away from the column body 422. A first wire routing slot 4211 is provided on a peripheral side wall of the first end plate 421, and the wire group 43 passes through the first wire routing slot 4211. The first wire routing slot 4211 is provided on the first end plate 421, so that the wire group 43 wound on the column body 422 can pass through the first wire routing slot 4211 and extend into the terminal 20, and the wire group 43 is connected to an external power supply through the terminal 20, thereby energizing the wire group 43 to form an electromagnetic field. In addition, the first wire routing slot 4211 is arranged, so that the wire group 43 can be prevented from being exposed outside a peripheral side wall of the first end 10a. This helps to reduce damage to the wire group 43 caused by friction between the wire group 43 and another structure, thereby improving service life of the wire group 43.

It will be understood that, in some other embodiments, the second end plate 423 of the bobbin 42 may be omitted, so that structures of the bobbin 42 and the coil assembly 234 are simpler. This is not limited in the present disclosure.

In this embodiment, the first end plate 421, the column body 422, and the second end plate 423 are all a circular ring shape. The radial dimension of the first end plate 421 is greater than the radial dimension of the column body 422, and a radial dimension of the second end plate 423 is greater than the radial dimension of the column body 422. The radial dimension of the first end plate 421 is greater than the radial dimension of the column body 422, and the radial dimension of the second end plate 423 is greater than the radial dimension of the column body 422, so that winding stability of the wire group 43 of the coil component 40 on the column body 422 is better.

It will be understood that, in some other embodiments, the first end plate 421, the column body 422, and the second end plate 423 may be prismatic or of another shape. A size relationship between the first end plate 421, the column body 422, and the second end plate 423 may be another relationship. This is not limited in the present disclosure.

Further, the first wire routing slot 4211 includes a first side surface 4212 and a second side surface 4213 that are disposed opposite to each other. The first side surface 4212 is inclined relative to a central axis of the first end plate 421, and the second side surface 4213 is inclined relative to the central axis of the first end plate 421. In addition, an inclination direction of the first side surface 4212 relative to the central axis of the first end plate 421 is the same as an inclination direction of the second side surface 4213 relative to the central axis of the first end plate 421. The first wire routing slot 4211 is arranged in an inclined configuration relative to a direction of the central axis of the first end plate 421, so that the wire group 43 passes through the first wire routing slot 4211 in a winding direction, and stress generated by the wire group 43 between an end portion of the first wire routing slot 4211 and an inner wall of the first wire routing slot 4211 can be reduced, thereby reducing a risk of the wire group 43 breaking when passing through the first wire routing slot 4211. Specifically, an inclination direction of the first wire routing slot 4211 is close to the winding direction of the wire group 43 on the column body 422, so that in a process in which the wire group 43 passes through the first wire routing slot 4211, an inclination angle between the wire group 43 and a side wall that is first in contact with the first wire routing slot 4211 is an obtuse angle, thereby reducing stress on the wire group 43 when passing through the first wire routing slot 4211.

It will be understood that, in some other embodiments, only the first side surface 4212 of the first wire routing slot 4211 is not parallel to a central axis of the bobbin 42. For example, only the first side surface 4212 is inclined relative to the central axis of the first end plate 421 or the bobbin 42, and the second side surface 4213 of the first wire routing slot 4211 may be parallel to the central axis of the first end plate 421 or the bobbin 42. This is not limited in the present disclosure.

Refer to FIG. 1 to FIG. 8. In a specific embodiment, the boss 41 is disposed at the end of the first end plate 421 that is away from the column body 422. A second wire routing slot 412 is provided on the boss 41. The wire group 43 passes through the second wire routing slot 412. The second wire routing slot 412 is arranged, so that the wire group 43 that passes through the first wire routing slot 4211 can pass through the second wire routing slot 412 to a side of the boss 41 that is away from an edge of the first end plate 421, to reduce a risk of wear between the wire group 43 and other structures other than the coil assembly 234.

It will be understood that the second wire routing slot 412 may be a through-hole, or may be a slot-shaped hole disposed at an edge of the boss 41, provided that the second wire routing slot 412 extends the boss 41 in a radial direction is ensured. This is not limited in the present disclosure.

Specifically, the boss 41 includes a first portion 413 and a second portion 414. The first portion 413 is connected to the first end plate 421. The second portion 414 is connected to the first portion 413. An extension direction of the second portion 414 and an extension direction of the first portion 413 are arranged at an included angle to form the second wire routing slot 412. The second portion 414 is provided, so that the second portion 414 is used to prevent the wire group 43 that passes through the second wire routing slot 412 to an edge of the boss 41 that is away from the first end plate 421 from moving toward the edge of the first end plate 421. This helps to improve stability of the wire group 43 in the coil assembly 234.

It will be understood that, in some other embodiments, the second wire routing slot 412 is not limited to being disposed at a joint between the boss 41 and the first end plate 421, and the second wire routing slot 412 may be disposed at another position of the boss 41. This is not limited in the present disclosure.

It will be understood that, in some other embodiments, the first portion 413 is not limited to extending in the axial direction, and the second portion 414 is not limited to extending in the radial direction, provided that forming an included angle between the extension direction of the first portion 413 and the extension direction of the second portion 414 is ensured. In addition, the included angle between the first portion 413 and the second portion 414 forms the second wire routing slot 412. This is not limited in the present disclosure.

Refer to FIG. 2 and FIG. 9. FIG. 9 is a partial enlarged view at a position A in the solenoid valve shown in FIG. 2. In a specific embodiment, the valve body assembly 50 includes the valve seat 51 and the base 52. The valve seat 51 is connected between the second end plate 423 and the base 52 in an axial direction of the valve seat 51. The valve seat 51 is fixedly connected to the accommodation cavity 11 of the housing 10. A peripheral side wall of the valve seat 51 is sealingly connected to an inner side wall of the housing 10. The base 52 is accommodated in the accommodation cavity 11 and fixedly connected to the housing 10.

In this embodiment, the valve seat 51 has a first connection slot 511 and a second connection slot 512 that are arranged in the axial direction of the valve seat 51. The second end plate 423 is provided with a first limiting column 4231, and the first limiting column 4231 is accommodated in the first connection slot 511. The base 52 has a second limiting column 521, and the second limiting column 521 is accommodated in the second connection slot 512. Through the arrangement of the first limiting column 4231, the second limiting column 521, the first connection slot 511, and the second connection slot 512, the first connection slot 511 is located on the valve seat 51, the first limiting column 4231 is located on the second end plate 423, and the first limiting column 4231 is accommodated in the first connection slot 511, relative rotation between the second end plate 423 and the valve seat 51 is restricted. This helps to improve connection stability and assembly consistency between the coil component 40 and the valve seat 51. In addition, because the second connection slot 512 is located on the valve seat 51, the second limiting column 521 is located on the base 52, and the second limiting column 521 is accommodated in the second connection slot 512, relative rotation between the base 52 and the valve seat 51 is restricted. This helps to improve connection stability and assembly consistency between the base 52 and the valve seat 51. In this way, in this embodiment, rotation between the coil component 40, the valve seat 51, and the base 52 is restricted. This helps to ensure assembly consistency between the coil component 40, the valve seat 51, and the base 52, thereby facilitating automatic assembly of other parts of the solenoid valve 100.

It will be understood that, in some other embodiments, a limiting column may be disposed on the valve seat 51, a connection slot is disposed at a corresponding position of the second end plate 423, and a connection slot is disposed at a corresponding position of the base 52. Alternatively, a connection slot and a limiting column may be disposed on the valve seat 51, a connection slot/limiting column is disposed at a corresponding position of the second end plate 423, and a limiting column/connection slot is disposed at a corresponding position of the base 52. This is not limited in the present disclosure.

It will be understood that, in some other embodiments, the valve seat 51 is provided with only the first connection slot 511, and the first connection slot 511 cooperates with the first limiting column 4231 correspondingly provided on the coil component 40. In other words, the first limiting column 4231 is accommodated in the first connection slot 511 to connect the valve seat 51 and the coil component 40. Alternatively, the valve seat 51 is provided with only the second connection slot 512, and the second connection slot 512 cooperates with the second limiting column 521 disposed on the base 52. In other words, the second limiting column 521 is accommodated in the second connection slot 512 to connect the valve seat 51 and the base 52.

Refer to FIG. 2. In a specific embodiment, the valve body assembly 50 further includes the movable iron core 53, the valve core 54, the connection rod 55, and the magnetic isolation tube 56. The movable iron core 53 is movably disposed in the accommodation cavity 11 in the axial direction, and the movable iron core 53 and the base 52 are disposed on two opposite sides of the valve seat 51 in the axial direction. The valve core 54 is movably arranged between the valve seat 51 and the base 52 in the axial direction, and the valve core 54 is configured to seal the base 52. The connection rod 55 movably passes through the valve seat 51 in the axial direction, and the connection rod 55 is connected between the movable iron core 53 and the valve core 54. The magnetic isolation tube 56 is accommodated in the accommodation cavity 11. The magnetic isolation tube 56 has an accommodating cavity 561 and an opening communicating with the accommodating cavity 561, and the opening is fixedly connected to and sleeved at an end of the valve seat 51 that is away from the base 52. The movable iron core 53 is accommodated in the accommodating cavity 561 and is movable in the accommodating cavity 561 in the axial direction.

The movable iron core 53 is a magnetic body, and after being energized, the coil component 40 provides a magnetic acting force to the movable iron core 53, so that the movable iron core 53 moves in the accommodating cavity 561 in the axial direction. According to the solenoid valve 100 provided in this embodiment, an electromagnetic field is formed after the coil component 40 is energized. The magnetic movable iron core 53 moves from top to bottom in an axial direction of the solenoid valve 100 under an action of the electromagnetic field formed by the coil component 40, so that the valve core 54 seals the base 52, to close the valve by blocking a fluid passage of the base 52 by the valve core 54.

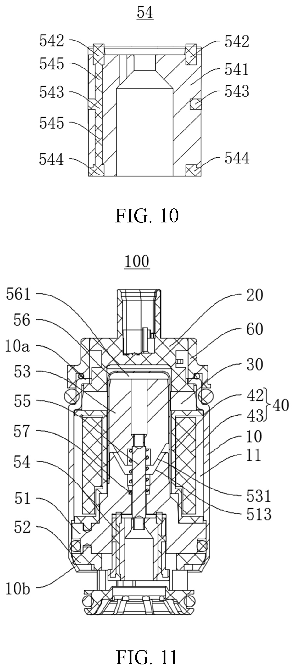

Refer to FIG. 2 and FIG. 10. FIG. 10 is a sectional view of the valve core according to an embodiment of the present disclosure. In some implementations, to reduce impact of the valve core 54 on the base 52, an elastic member 57 is disposed between the movable iron core 53 and the valve seat 51, and the elastic member is elastically compressed between the movable iron core 53 and the valve seat 51. The elastic member 57 is elastically compressed between the movable iron core 53 and the valve seat 51, so that when the movable iron core 53 drives the valve core 54 to move toward the base 52, an elastic force of the elastic member 57 can buffer a movement speed of the valve core 54 toward the base 52, thereby reducing the impact of the valve core 54 on the base 52 and reducing damage to the valve core 54 and the base 52. This helps to improve service life of the solenoid valve 100.

Further, the valve core 54 includes a body portion 541, a buffer portion 542, a first sealing portion 544, and a second sealing portion 543. The buffer portion 542 is disposed at an end face of an end of the valve core 54 that is close to the connection rod 55. The buffer portion 542 is configured to be in contact with the valve seat 51 in a process in which the valve core 54 moves in the axial direction, to reduce impact speed and impact force between the valve core 54 and the valve seat 51, thereby extending service lives of the valve seat 51 and the valve core 54. The second sealing portion 543 is disposed on a peripheral side wall of the valve core 54, and the second sealing portion 543 is configured to maintain a sealing connection between the peripheral side wall of the valve core 54 and an inner side wall of the valve seat 51, to prevent fluid from leaking between the peripheral side wall of the valve core 54 and the inner side wall of the valve seat 51. This helps to ensure operating performance of the solenoid valve 100. The first sealing portion 544 is disposed at an end face of an end of the valve core 54 that is away from the connection rod 55, and the first sealing portion 544 is configured to block a flow passage of the valve seat 51 when the valve core 54 is in contact with the base 52, to implement a valve closing function of the solenoid valve 100. The buffer portion 542, the second sealing portion 543, and the first sealing portion 544 are of an integrated structure. In other words, the buffer portion 542, the second sealing portion 543, and the first sealing portion 544 are integrally integrated on the body portion 541 of the valve core 54. This helps to reduce processing difficulty of the valve core 54 and improve processing efficiency of the valve core 54.

In this embodiment, the valve core 54 further includes a connection portion 545, and the connection portion 545 integrally connects the buffer portion 542, the first sealing portion 544, and the second sealing portion 543.

It will be understood that, in some other embodiments, the connection portion 545 integrally connects only the second sealing portion 543 and the buffer portion 542, and the first sealing portion 544 is separately provided; only the first sealing portion 544 and the buffer portion 542 are provided, and the second sealing portion 543 is omitted; or only the second sealing portion 543 and the buffer portion 542 are provided, and the first sealing portion 544 is omitted. This is not limited in the present disclosure.

Refer to FIG. 11. FIG. 11 is a sectional view of another solenoid valve according to an embodiment of the present disclosure. In a specific embodiment, a chamfer 531 is disposed at an end of a movable iron core 53 that is close to a connection rod 55. A flared portion 513 is disposed at an end of a valve seat 51 that is close to the movable iron core 53. The chamfer 531 of the movable iron core 53 is partially accommodated in the flared portion 513 of the valve seat 51. The movable iron core 53 can extend into the valve seat 51, so that a size of the movable iron core 53 inside a magnetic isolation tube 56 is larger, and a magnetic field acting force on the movable iron core 53 is larger. This helps to improve sensitivity of the movable iron core 53 in driving a valve core 54 and the connection rod 55 to move. In addition, the movable iron core 53 can extend into the valve seat 51. This helps to reduce space for the movable iron core 53 to move in an axial direction, thereby reducing assembly space of the solenoid valve 100 in the axial direction, and facilitating overall miniaturization development of the solenoid valve 100.

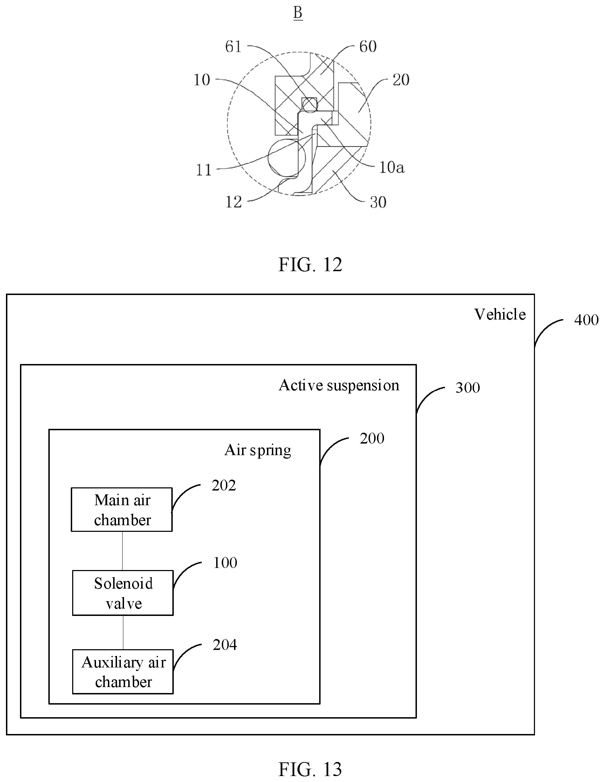

Refer to FIG. 2 and FIG. 12. FIG. 12 is a partial enlarged view at a position B in the solenoid valve shown in FIG. 2. In a specific implementation, the housing 10 includes the first end 10a and the second end 10b that are disposed opposite to each other. The terminal 20 extends out from the first end 10a, and the valve body assembly 50 extends out from the second end 10b. The solenoid valve 100 further includes the sealing member 60. The sealing member 60 is sleeved on the first end 10a. The sealing member 60 is sealingly connected to an outer side wall of the terminal 20 extending out of the housing 10. The sealing member 60 is also sealingly connected to an end face of the first end 10a. The sealing member 60 is sealingly connected to a peripheral side wall close to the first end 10a. The sealing member 60 is arranged, so that an opening of the accommodation cavity 11 at the first end 10a is sealed, thereby preventing impurities in an environment from entering the accommodation cavity 11 through the opening of the accommodation cavity 11 at the first end 10a, and preventing impurities in the environment from contaminating parts in the accommodation cavity 11.

Further, the sealing member 60 has a first step surface 61, and the first step surface 61 is sealingly connected to the end face of the first end 10a through a sealing ring. The housing 10 has a second step surface 12. The sealing member 60 is sleeved on the end face of the first end 10a and sealingly connected to the second step surface 12 through a sealing ring. The sealing member 60 provides a double seal for the first end 10a of the housing 10. This helps to further improve sealing effect of the opening of the accommodation cavity 11 at the first end 10a, further prevent impurities in the environment from entering the accommodation cavity 11 through the opening of the accommodation cavity 11 at the first end 10a, prevent impurities in the environment from contaminating the parts in the accommodation cavity 11, and improve service life of the solenoid valve 100.

Refer to FIG. 13. An air spring 200 provided in some embodiments of the present disclosure includes a main air chamber 202, an auxiliary air chamber 204, and the solenoid valve 100 described above. The solenoid valve 100 is adapted to be connected between the main air chamber 202 and the auxiliary air chamber 204, to control connection or disconnection between the main air chamber 202 and the auxiliary air chamber 204, thereby switching between different stiffness of the air spring 200.

An active suspension 300 provided in some embodiments of the present disclosure includes the foregoing air spring 200 or the foregoing solenoid valve 100.

A vehicle 400 provided in some embodiments of the present disclosure includes the foregoing active suspension 300, the foregoing air spring 200, or the foregoing solenoid valve 100.

It will be understood that, in some other embodiments, the vehicle 400 includes the active suspension 300, and the active suspension 300 includes the air spring 200, or the active suspension 300 includes the solenoid valve 100. This is not limited in the present disclosure.

It will be understood that, in some other embodiments, the vehicle 400 includes only the air spring 200. The air spring 200 includes a main air chamber 202, an auxiliary air chamber 204, and the solenoid valve 100. The solenoid valve 100 is configured to control connection or disconnection between the main air chamber 202 and the auxiliary air chamber 204. This is not limited in the present disclosure.

It will be understood that, in some other embodiments, the vehicle 400 includes the solenoid valve 100.

In addition, the solenoid valve 100 may be further used in another device, for example, an engineering machine. This is not limited in the present disclosure.

The foregoing descriptions are some implementations of the present disclosure. It will be noted that a person of ordinary skill in the art may further make some improvements and modifications without departing from the principle of the present disclosure, and the improvements and modifications shall fall within the protection scope of the present disclosure.

## Claims

1. A coil assembly (234), configured for use in a solenoid valve (100), comprising:
a coil component (40), the coil component (40) being provided with a boss (41); and
a terminal (20), the terminal (20) being disposed at an end of the coil component (40) in an axial direction, the terminal (20) being provided with a limiting slot (21), and the boss (41) being non-rotatably engaged with the limiting slot (21).

2. The coil assembly (234) according to claim 1, wherein the coil assembly (234) further comprises a magnetic conductive ring (30), the magnetic conductive ring (30) is disposed between the coil component (40) and the terminal (20), the magnetic conductive ring (30) is provided with a positioning slot (31), and the boss (41) passes through the positioning slot (31) and is non-rotatably engaged with the limiting slot (21).

3. The coil assembly (234) according to claim 2, wherein a peripheral side wall of the boss (41) is in contact with an inner side wall of the positioning slot (31), and the peripheral side wall of the boss (41) is further in contact with an inner side wall of the limiting slot (21).

4. The coil assembly (234) according to any one of claims 1 to 3, wherein the coil component (40) comprises a bobbin (42), the bobbin (42) comprises a first end plate (421) and a column body (422) that are fixedly connected to each other, the column body (422) is configured to wind a wire group (43) of the coil component (40), the first end plate (421) is disposed at an end of the column body (422) that is close to the terminal (20), a part of the first end plate (421) protrudes outward in a radial direction of the column body (422), a first wire routing slot (4211) is provided on a peripheral side wall of the first end plate (421), and the wire group (43) passes through the first wire routing slot (4211).

5. The coil assembly (234) according to claim 4, wherein the first wire routing slot (4211) at least comprises one first side surface (4212), and the first side surface (4212) is not parallel to a central axis of the bobbin (42).

6. The coil assembly (234) according to claim 5, wherein the first wire routing slot (4211) comprises the first side surface (4212) and a second side surface (4213) that are disposed opposite to each other, the first side surface (4212) is inclined relative to a central axis of the first end plate (421), the second side surface (4213) is inclined relative to the central axis of the first end plate (421), and an inclination direction of the first side surface (4212) is the same as an inclination direction of the second side surface (4213).

7. The coil assembly (234) according to any one of claims 4 to 6, wherein the boss (41) is disposed at an end of the first end plate (421) that is away from the column body (422), the boss (41) is provided with a second wire routing slot (412), and the wire group (43) passes through the second wire routing slot (412).

8. The coil assembly (234) according to claim 7, wherein the boss (41) comprises a first portion (413) and a second portion (414), the first portion (413) is connected to the first end plate (421), the second portion (414) is connected to the first portion (413), and an extension direction of the second portion (414) and an extension direction of the first portion (413) are disposed at an included angle to form the second wire routing slot (412).

9. The coil assembly (234) according to any one of claims 4 to 8, wherein two bosses (41) are provided, and the two bosses (41) are disposed opposite to each other in a diameter direction of the bobbin (42).

10. The coil assembly (234) according to claim 9, wherein the two bosses (41) have different structures.

11. A solenoid valve (100), comprising a housing (10), a valve body assembly (50), and the coil assembly (234) according to any one of claims 1 to 10, the housing (10) having an accommodation cavity (11), the coil assembly (234) and the valve body assembly (50) being accommodated in the accommodation cavity (11), and the coil assembly (234) being sleeved on the valve body assembly (50).

12. The solenoid valve (100) according to claim 11, wherein the valve body assembly (50) comprises a valve core (54), the valve core (54) comprises a body portion (541), a buffer portion (542), and a first sealing portion (544), the buffer portion (542) is disposed at an end of the body portion (541) that is close to the terminal (20), and the first sealing portion (544) is disposed at an end of the body portion (541) that is away from the terminal (20).

13. The solenoid valve (100) according to claim 12, wherein the valve core (54) further comprises a connection portion (545), and the connection portion (545) integrally connects the buffer portion (542) and the first sealing portion (544).

14. The solenoid valve (100) according to claim 13, wherein the valve core (54) further comprises a second sealing portion (543), the second sealing portion (543) is disposed on a peripheral side wall of the body portion (541), and the connection portion (545) integrally connects the buffer portion (542), the first sealing portion (544), and the second sealing portion (543).

15. The solenoid valve (100) according to any one of claims 11 to 14, wherein the valve body assembly (50) comprises a valve seat (51);
wherein one of the valve seat (51) and the coil component (40) is provided with a first connection slot (511), the other is provided with a first limiting column (4231), and the first limiting column (4231) is accommodated in the first connection slot (511).

16. The solenoid valve (100) according to claim 15, wherein the valve body assembly (50) further comprises a base (52), the base (52) is disposed on a side of the valve seat (51) that is away from the coil component (40), one of the valve seat (51) and the base (52) is provided with a second connection slot (512), the other is provided with a second limiting column (521), and the second limiting column (521) is accommodated in the second connection slot (512).

17. The solenoid valve (100) according to any one of claims 11 to 14, wherein the valve body assembly (50) comprises a valve seat (51) and a movable iron core (53), a chamfer (531) is disposed at an end of the movable iron core (53) that is close to the valve seat (51), a flared portion (513) is disposed at an end of the valve seat (51) that is close to the movable iron core (53), and the chamfer (531) mates with the flared portion (513).

18. An air spring (200), comprising a main air chamber (202), an auxiliary air chamber (204), and the solenoid valve (100) according to any one of claims 11 to 17, the solenoid valve (100) being configured to control connection or disconnection between the main air chamber (202) and the auxiliary air chamber (204).

19. An active suspension (300), comprising the air spring (200) according to claim 18 or the solenoid valve (100) according to any one of claims 11 to 17.

20. A vehicle (400), comprising the active suspension (300) according to claim 19, the air spring (200) according to claim 18, or the solenoid valve (100) according to any one of claims 11 to 17.
